# EUROPEAN PATENT SPECIFICATION

(11) **EP 2 497 362 B1**
(45) Date of publication and mention of the grant of the patent: **10.07.2013**
(21) Application number: 11192244.9
(22) Date of filing: 06.12.2011
(51) Int. Cl.: A01N 25/08, A01N 25/22, A01N 25/34, A01N 43/16, A01P 11/00

(54) **Rodenticidal formulations based on 4-hydroxycoumarins, in paste, block or pellet form, with improved efficacy in warm-humid environments**
Rodentizidformulierungen auf Basis von 4-Hydroxycoumarinen in Pasten, Block- oder Pelletform mit verbesserter Wirksamkeit in feuchtwarmen Umgebungen
Formulation à base des 4-hydroxycoumarines pour tuer les rongeurs sous forme de pâte, de bloc ou de pastilles avec une meilleure efficacité dans des environnements chauds et humides

(30) Priority: 10.03.2011 IT MI20110382
(43) Date of publication of application: 12.09.2012
(73) Proprietor: Activa S.r.l., 20132 Milano (IT); Dr. Tezza S.r.l., 37050 Angiari (Verona) (IT)
(72) Inventor: Gualdi, Stefano, 20096 Pioltello (Milano) (IT); Tezza, Pierluigi, 37020 Cerro Veronese (Verona) (IT)
(74) Representative: Petruzziello, Aldo

(56) References cited:
- EP-A2- 0 372 796
- DE-A1- 19 837 064
- US-A1- 2005 181 003
- US-A1- 2010 260 813
- Jatinder M Khanna ET AL: "Atromentin - Anticoagulant from Hydnellum diabolus", Journal of Pharmaceutical Sciences, 1 July 1965 (1965-07-01), pages 1016-1020, XP55017026, DOI: 10.1002/jps.2600540714 Retrieved from the Internet: URL:http://onlinelibrary.wiley.com/store/1 0.1002/jps.2600540714/asset/2600540714_ftp .pdf?v=1&t=gxmwi3jg&s=4bec73332034236f2933 a0faa1844caa9f22c0e0 [retrieved on 2012-01-20]

## Description

The present invention relates to rodenticidal formulations in paste, block or pellet form, with improved chemical and physical stability to environmental humidity and/or temperature and improved efficacy in warm-humid environments.

Various formulations are available, suitable for the control of rodents, in the form of paste, pellets, paraffin blocks and the like. The agents with rodenticidal action contained in these formulations are generally anticoagulants belonging to the family of the hydroxycoumarins such as warfarin, bromadiolone, brodifacoum and difenacoum

Rodenticidal compositions are particular popular in the form of paste with a base of vegetable oils and flours since these components, in particular the pastes containing palm oil, make the product highly palatable for the rat.

However, since this oil has a low melting temperature, around 36-39°C, as soon as the temperature rises there is a morphological change in the composition which changes from a paste consistency to a more liquid one, so that the liposoluble active ingredient tends to migrate together with the oil, in this way modifying the efficacy of the bait.

Additionally, even if the aforesaid active ingredients, and in particular the bromadiolone, are particularly stable when they are in oil-based formulations, they are in any case less stable when they come into contact with water: for this reason there is a tendency to compensate this phenomenon by using a larger quantity of active ingredient, generally around 10% more, than is necessary and normally provided for these rodenticidal baits. This is disadvantageous both for economical and ecotoxicological reasons.

EP0372796 (A2) disclose rodenticidal bait in the form of waxed pellets formed by a powdered wax which melts under the heat generated by friction during palletisation, a rodenticide, a cereal flour, a palatability agent and colouring agents.

US2010/260813 (A1) discloses a rodenticidal bait formed by a rodenticide, cereal powder, paraffin wax, analgesic compounds, oxidation stabilizers, colorant, bittering agent and bases to adjust the pH of the mixture when said bait is in the form of gels.

DE19837064 (A1) discloses a rodenticide bait system of past-like consistency containing a rodenticide, attracting components, which is stabilized against moisture by the incorporation of a fat of m.pt. 20-70 deg C.

US2005181003 (A1) relates to water-based rodenticidal gels which do not cure, remain attractive to harmful rodents for long period, retain their viscosity and adhere permanently to surfaces, said gels containing an anticoagulant, a bait material, a colouring agent, humectants, preservatives, water and sodium hydroxide to adjust the pH.

The object of the present invention is that of having available a rodenticidal formulation able to overcome, also in part, the disadvantages of the prior art, in particular a composition wherein the active ingredient does not suffer changes where there is humidity and the physical state undergoes minimal changes as the temperature increases.

Another object is that of having available such a formulation which is highly palatable and technically and economically advantageous, all this applicable also to the form of paraffined block and to that of pellets.

These objects are achieved by the rodenticidal formulation in accordance with the invention having the features listed in the annexed independent claim 1.

Advantageous embodiments of the invention are disclosed by the dependent claims.

The composition, object of the present invention and suitable for forming a rodenticidal bait in paste, block or pellet form, comprises
- one or more palatable solvents for rodents in which a rodenticidal active ingredient from the family of anticoagulants is dissolved, preferably dissolved at 0.25% by weight,
- one or more vegetable flours,
- one or more binding agents selected from refined and/or crude vegetable fats/oils having a melting temperature higher than 36-39°C and paraffin waxes, and is characterised in that it further contains calcium hydroxide as stabilizing agent of the formulation.

As anticoagulant rodenticidal active ingredient mention can be made of warfarin, bromadiolone, brodifacoum, difenacoum, preferably bromadiolone. Generally the active ingredient is in amounts comprised between 0.001-0.04% by weight, preferably 0.005%.

The amount by weight of calcium hydroxide is about 50-90 times higher than that of the active ingredient, preferably about 75-80 times higher.
For example, when the amount of active ingredient is around 0.05g per kg of composition, the amount of calcium hydroxide varies from 2 to 4.5g per kg of composition.

As solvents palatable for rodents mention can be made of polyethylene glycol, polypropylene glycol, or mixtures thereof. Generally their amount is comprised between 2-5% by weight.

As vegetable flours mention can be made of edible flours of cereals such as grain, corn, rice, barley, oat, wheat, flours of tapioca, flour of chestnuts, flour of coconuts or mixtures thereof; potato starch, dextrins and the like. Generally their amount is comprised between 20-90% by weight, preferably 30-80% by weight.

Said edible flours can also be in a mixture with small amounts of wood flours, wood shavings, cellulose and the like, and/or with corn starch and other starches, in particular in the formulations in pellet form, in order to give a high consistency to the mixture to be extruded.

Generally wood flours and wood shavings are preferred in said formulations, in amounts less than 5%.

The vegetable fats/oils are preferably used as binding agents in the composition of the invention when baits are required in paste form. It should be noted that these binding agents are advantageous in that also provided with high palatability for the rodent species.

Their amounts in the compositions in paste form is generally comprised between 20-30% by weight, and the weight ratio between said vegetable fats/oils and said flours is chosen so as to obtain a composition with the consistency of a paste, for example in a weight ratio of 1:2.5.

The amount of said vegetable fats/oils in the compositions in pellet form is generally of the order of 5% by weight or also less, for example of the order of 0.5-1%, and has substantially the function of facilitating the extrusion of the pellet mixture.

The term "vegetable fats/oils having a melting temperature greater than 36-39°C" is intended to identify the following compounds:
- vegetable oils which are presented in solid form at temperatures around 36-39°C,
- vegetable fats having a melting temperature higher than 36-39°C,
- derivatives of vegetable oils which are liquid at ambient temperature, obtained from the partial or complete hydrogenation (hydrogenated derivatives) of said oils and therefore with a higher melting point.

In fact hydrogenation increases the percentage of saturated fats in the oil, its viscosity and the melting point of the oil/fat, reducing at the same time also the tendency to go rancid.

The vegetable oils which are presented in solid form at temperatures around 36-39°C have a high content of saturated fats, generally greater than 50%.

As vegetable oils which can be subjected to partial or complete hydrogenation, mention can be made of peanut oil, castor oil, olive oil, palm oil, coconut oil, sesame oil, grape seed oil, soybean oil, rapeseed oil.

Preference is given to crude palm oil having an acidity (as palmitic acid) lower than or equal to 5%, or partially hydrogenated oils having a melting temperature of about 50°C, also in mixtures thereof.

Should the melting temperature of said vegetable fats/oils be very high and much higher than 36-39°C, it is possible to use them in a mixture with one or more of the vegetable oils mentioned above (in non-hydrogenated form) in order to lower the melting point of said vegetable fats/oils.

The paraffin wax which is preferred in the preparation of rodenticidal compositions in block form generally has a typical melting point between approximately 47°C and 64°C. Generally its amount is comprised between 20-40% by weight.

Paraffin wax can also be used in the formulations of the pellets, in addition to or in place of the vegetable oils, to facilitate the formation of the same.

The composition in paste, block or pellet form of the invention also contains preferably one or more of the following substances:
- preservatives against fungi, yeasts, bacteria and the like, such as for example, and not exclusively, sorbic acid and bronopol, in amounts generally comprised between 0.01-0.5% by weight;
- bittering substances such as denatonium benzoate to prevent accidental ingestion, in amounts generally comprised between 0.001-0.01% by weight;
- emulsifying agents such as triethanolamine (TEA), in amounts generally comprised between 0.1-1% by weight;
- pigments and/or colouring agents to highlight the rodenticidal bait, preferably pigments which create a blue colour, generally in amounts comprised between 0.01-0.5% by weight;
- one or more sugars (carbohydrates) such as saccharose, lactose and the like to increase the palatability of the bait, generally in amounts comprised between 0.1-8%, preferably 0.5-6% by weight.

Moreover, above all in the case of formulation in paste form, the composition can also contain milk proteins to make it even more palatable, in amounts generally comprised between 0.5-2% by weight, and antioxidant additives to prevent the vegetable oils used turning rancid, such as for example BHA, BHT or mixtures thereof, in amounts generally comprised between 0.01-0.5% by weight.

In addition to the abovementioned substances, it is also possible for the composition in pellet form to contain also one or more fillers such as for example sodium lignin, calcium sulphate, in order to confer to the mixture of the formulation such a consistency as to be able to be extruded, producing pellets. Generally their total content varies from 1% to 10% by weight, preferably from 4 to 7% by weight.

A preferred paste formulation is the following:
- 0.0050% by weight of active ingredient, preferably bromadiolone,
- 0.001 % by weight of denatonium benzoate as bittering substance,
- 0.3% by weight of TEA as emulsifying agents,
- 0.15% by weight of polyethylene glycol 200 as palatable solvent,
- 1.85% by weight of propylene glycol as palatable solvent,
- 24.8% by weight of crude or partially hydrogenated palm oil as vegetable oil,
- 1% by weight of saccharose as carbohydrate,
- 1% by weight of powdered milk as source of milk proteins,
- 0.375% by weight of calcium hydroxide as stabilizing agent of the active ingredient,
- 0.016% by weight of BHA as antioxidant,
- 0.016% by weight of BHT as antioxidant,
- 0.1% by weight of sorbic acid as preservative,
- 0.05% by weight of bronopol as preservative,
- 0.03% by weight of a blue colouring agent as pigment,
- up to 100% by weight of a mixture of flours of cereals.

A preferred rodenticidal formulation, in block form, in accordance with the present invention, is the following:
- 0.0050% by weight of active ingredient, preferably bromadiolone,
- 0.001% by weight of denatonium benzoate as bittering substance,
- 0.3% by weight of TEA as emulsifying agents,
- 0.15% by weight of polyethylene glycol as palatable solvent, preferably with molecular weight around 200,
- 1.85% by weight of propylene glycol as palatable solvent,
- 35% by weight of paraffin wax,
- 6% by weight of saccharose as carbohydrate,
- 0.375% by weight of calcium hydroxide as stabilizing agent of the active ingredient,
- 0.1 % by weight of sorbic acid as preservative,
- 0.05% by weight of bronopol as preservative,
- 0.04% by weight of a blue colouring agent as pigment,
- up to 100% by weight of a mixture of flours of cereals.

A preferred rodenticidal formulation, in pellet form, in accordance with the present invention, is the following:
- 0.0050% by weight of active ingredient, preferably bromadiolone,
- 0.001% by weight of denatonium benzoate as bittering substance,
- 0.3% by weight of TEA as emulsifying agents,
- 0.15% by weight of polyethylene glycol as palatable solvent, preferably with molecular weight around 200,
- 1.85% by weight of propylene glycol as palatable solvent,
- 0.5% by weight of crude or partially hydrogenated palm oil as vegetable oil,
- 3% by weight of calcium sulphate as filler,
- 3% by weight of saccharose as carbohydrate,
- 2% by weight of sodium lignin as filler,
- 1% by weight of wood shavings and flour as filler,
- 0.375% by weight of calcium hydroxide as stabilizing agent of the active ingredient,
- 0.1% by weight of sorbic acid as preservative,
- 0.05% by weight of bronopol as preservative,
- 0.04% by weight of a blue colouring agent as pigment,
- up to 100% by weight of a mixture of flours of cereals.

The formulation of the invention can be prepared using known methods, for example mixing, while stirring, first the flours with the vegetable oil or with the softened paraffin wax and subsequently adding the active ingredient and the other components of the composition, until a homogeneous mixture is obtained having the consistency of paste or a greater consistency in the case wherein a bait is being prepared in block form containing paraffin wax and, in the case of pellets, such a flow as to allow extrusion thereof.

It should be noted that in the abovementioned preparation it is preferable to add the active ingredient in the form of solution/dispersion of the active ingredient in a palatable solvent and prepared previously.

In fact, due to the highly hazardous nature of the molecules, given their marked anticoagulant activity, the rodenticidal active ingredients of the family of the anticoagulants are used in the form of liquid preparations in specific solvents containing approximately 0.25% of active ingredient.

Active ingredients preparations which are based on polyethylene, ethylene or propylene glycols are preferred in that they are palatable solvents for rodents.

The present composition is advantageous in that, thanks to the presence of calcium hydroxide, it shows improved stability in time and consequent efficacy in warm-humid environments.

Moreover, in the case of composition in paste form, the preparation also shows greater physical stability to warm climates compared to other pastes thanks to the use of palatable vegetable fats/oils yet having a melting temperature higher than 36-39°C.

Therefore the composition of the present invention is highly advantageous when used in warm-humid environmental conditions.

Numerous detail modifications and changes, within the reach of a person skilled in the art, may be made to the present embodiment of the invention, in any case coming within the scope of the invention disclosed by the annexed claims.

The following are non-limiting examples illustrating the present invention.

### EXAMPLES

### Example 1

A paste is prepared having the preferred composition described previously, adding the ingredients, in the order specified herein below, in a plunging-arm mixer, prolonging the time of mixing until complete homogenisation of the mixture, which can be monitored by the distribution of the added colour:
a.- first phase of dry mixing of the powder components: flour, sugars, pigments
b.- adding of the liquid/semisolid components such as preservatives, active ingredient (bromadiolone), vegetable fat/oil
c.- mixing until the required consistency and homogeneity are obtained
d.- transfer of the mass into feed screw batcher for the formation of the finished bait, generally in 10g paper sachets.

A formulation in block form is then prepared having the preferred composition described above, adding the ingredients, in the order specified herein below, in a heated plunging-arm mixer, prolonging the time of mixing until complete homogenisation of the mixture, which can be monitored by the distribution of the added colour:
a.- first phase of dry mixing of the powder components: flour, sugars, pigments
b.- adding of the liquid/semisolid components such as oils, fats, paraffin
c.- adding of the liquid components such as preservatives and active ingredient (bromadiolone),
d.- mixing until the required consistency and homogeneity are obtained
d.- transfer of the mass in extruder with cutting for the formation of the finished bait, generally in 10-20g forms.
e.- cooling of the blocks obtained in this way.

Alternatively the blocks can also be prepared by pouring into special moulds of the mass in the semi-molten state or by moulding and compression.

A formulation in pellet form is also prepared having the preferred composition described above, adding the ingredients, in the order specified herein below, in a belt mixer, prolonging the time of mixing until complete mixing of the powders and of the liquids, which can be monitored by the distribution of the added colour:
a.- first phase of dry mixing of the powder components: flour, sugars, pigments
b.- adding of the liquid/semisolid components such as oils, fats, paraffin
c.- adding of the liquid components such as preservatives and active ingredient (bromadiolone),
d.- mixing until homogeneity is obtained
d.- transfer of the mass in feed screw extruder with cutting for the formation of the finished bait, generally in 1-2g forms.

The same number of formulations were then prepared as defined above but without calcium hydroxide.

Subsequently various checks were carried out on the different forms (paste, block and pellet) without the addition of calcium hydroxide and with the addition of calcium hydroxide.

It was confirmed that the addition of calcium hydroxide, in particular not only with the active ingredient bromadiolone but also with the other anticoagulants, leads to good stabilization of the formulation.

For example the same paste formulation prepared with calcium hydroxide and without calcium hydroxide, at the HPLC analysis performed immediately after the preparation, shows the following results:
- 0.005% active ingredient batching on adding into the mixer, i.e. 50g per 1000kg of formula,
the result at HPLC analysis immediately after the preparation is
- for the formulation without calcium hydroxide: 0.004% of active ingredient (bromadiolone),
- for the formulation with calcium hydroxide: 0.005% of active ingredient (bromadiolone).

Moreover the paste formulation obtained with the vegetable fats/oils as above has a stable physical form at high environmental temperatures and does not entail release at touch.

The abovementioned formulations were subjected to an ageing test at 2, 4, 6, 12, 18, 24 months: the formulation without hydroxide showed a loss in weight of active ingredient greater than 25% already at six months while the loss in weight of active ingredient of the formulation containing hydroxide was totally negligible after 12 months.

## Claims

1. Formulation suitable for forming a rodenticidal bait in paste, block or pellet form, comprising
- one or more palatable solvents for rodents in which a rodenticidal active ingredient, which is selected from bromadiolone, brodifacoum, difenacoum, warfarin, is dissolved,
- one or more vegetable flours,
- one or more binding agents selected from the group consisting of refined and/or crude vegetable fats/oils having a melting temperature higher than 36-39°C, and paraffin waxes,
**characterised in that** it further contains calcium hydroxide as stabilizing agent of the formulation.

2. Formulation according to claim 1 wherein the active ingredient is in amounts comprised between 0.001-0.04% by weight.

3. Formulation according to claim 1 or 2 wherein the amount by weight of calcium hydroxide is about 50-90 times higher than that of the active ingredient.

4. Formulation according to any one of the previous claims wherein the rodent palatable solvents are polyethylene glycol, polypropylene glycol, or mixtures thereof, and are in a total amount comprised between 2-5% by weight.

5. Formulation according to any one of the previous claims wherein the vegetable flours are selected from the group consisting of edible flours of cereals; potato starch, dextrins and the like, and are contained in amounts comprised between 20-90%.

6. Formulation according to any one of the previous claims wherein the vegetable oil/fat is in amounts comprised between 20-30% by weight, when it is in the form of paste.

7. Formulation according to claim 6 wherein the oil is a crude palm oil having an acidity (as palmitic acid) lower than or equal to 5%, or partially hydrogenated oils having a melting temperature of about 50°C, or mixtures thereof.

8. Formulation according to any one of previous claims 1-5 wherein the paraffin wax is in amounts comprised between 20-40% by weight, when it is in the form of block.

9. Formulation according to any one of previous claims 1-5 wherein the vegetable oil/fat and/or the paraffin wax are in total amounts of 5% by weight or also lower, when it is in the form of pellets.

10. Formulation according to ariy one of previous claims further comprising
- 0.1-1% by weight of one or more emulsifying agents; and/or
- 0.1-8% by weight, preferably 0.5-6%, of one or more carbohydrates; and/or
- 0.01-0.5% by weight of one or more preservatives against fungi, yeast, bacteria and the like; and/or
- 0.001-0.01% by weight of one or more bittering substances; and/or
- 0.01-0.5% by weight of one or more pigments and/or colouring agents to highlight the bait.

11. Formulation according to any one of previous claims 1-7, 9-10 in the form of paste wherein, when vegetable oils are used, antioxidant additives are also present in amounts comprised between 0.01-0.5% by weight, and also powdered milk is present in amounts comprised between 0.5 and 2% by weight.

12. Process for preparing a rodenticidal formulation in the form of paste, block or pellets as defined by any one of previous claims 1-11 comprising the steps of
- mixing, while stirring, the flours with the powdery components of the formulation,
- adding the active ingredient dissolved in the solvent and the other liquid components of the formulation, then the vegetable oil and/or the softened paraffin wax,
- mixing until obtaining a homogeneous mixture having the consistency of a paste or an increased consistency in the case of block or pellets.

13. Formulation according to any one of the preceding claims 1 to 11 wherein said rodenticidal active ingredient is dissolved in said one or more palatable solvents for rodents at 0.25% by weight.

14. Formulation according to any one of the preceding claims 1 to 11 wherein when the vegetable flours are edible flours of cereals, they are selected from the group consisting of grain, corn, rice, barley, oat, wheat, flours of tapioca, flour of chestnuts, flour of coconuts or mixtures thereof.

15. Formulation according to any one of the preceding claims 1 to 11 wherein when the vegetable flours are edible flours of cereals, they are admixed with wood flours, wood shavings, cellulose and the like, and/or with corn starch, other starches, in amounts lower than 5% by weight.

## Patentansprüche

1. Formulierung, die zum Bilden eines Rodentizidköders in Pasten-, Block- oder Pelletform geeignet ist, umfassend
- ein oder mehrere, für Nagetiere schmackhafte Lösungsmittel, in dem/denen ein Rodentizidwirkstoff, der unter Bromadiolon, Brodifacoum, Difenacoum, Warfarin ausgewählt wird, gelöst ist,
- ein oder mehrere Pflanzenmehle,
- ein oder mehrere Bindemittel, ausgewählt aus der Gruppe bestehend aus raffinierten und/oder rohen Pflanzenfetten-/ölen, die eine Schmelztemperatur von über 36 - 39 °C aufweisen, und Paraffinwachsen,
**dadurch gekennzeichnet, dass** sie des Weiteren Calciumhydroxid als Stabilisator der Formulierung enthält.

2. Formulierung nach Anspruch 1, wobei der Wirkstoff in Mengen, die zwischen 0,001 - 0,04 Gew.-% liegen, vorliegt.

3. Formulierung nach Anspruch 1 oder 2, wobei die Gewichtsmenge Calciumhydroxid etwa 50 - 90-mal höher ist als diejenige des Wirkstoffs.

4. Formulierung nach einem der vorhergehenden Ansprüche, wobei die für Nagetiere schmackhaften Lösungsmittel Polyethylenglykol, Polypropylenglykol oder Mischungen davon sind und in einer Gesamtmenge, die zwischen 2 - 5 Gew.-% liegt, vorliegen.

5. Formulierung nach einem der vorhergehenden Ansprüche, wobei die Pflanzenmehle aus der Gruppe ausgewählt sind bestehend aus essbaren Mehlen von Cerealien; Kartoffelstärke, Dextrinen und dergleichen und in Mengen enthalten sind, die zwischen 20 - 90 % liegen.

6. Formulierung nach einem der vorhergehenden Ansprüche, wobei das Pflanzenöl/-fett in Mengen vorliegt, die zwischen 20 - 30 Gew.-% liegen, wenn es in Form einer Paste vorliegt.

7. Formulierung nach Anspruch 6, wobei das Öl ein rohes Palmöl, das eine Azidität (als Palmitinsäure) von weniger als oder gleich 5 % aufweist, oder teilweise hydrierte Öle, die eine Schmelztemperatur von etwa 50 °C aufweisen, oder Mischungen davon ist.

8. Formulierung nach einem der vorhergehenden Ansprüche 1 - 5, wobei das Paraffinwachs in Mengen vorliegt, die zwischen 20 - 40 Gew.-% liegen, wenn es in Blockfolm vorliegt.

9. Formulierung nach einem der vorhergehenden Ansprüche 1 - 5, wobei das Pflanzenfett/-öl und/oder das Paraffinwachs in Gesamtmengen von 5 Gew.-% oder auch weniger vorliegt, wenn es in Form von Pellets vorliegt.

10. Formulierung nach einem der vorhergehenden Ansprüche, des Weiteren umfassend
- 0,1 - 1 Gew.-% eines oder mehrerer Emulgiermittel; und/oder
- 0,1 - 8 Gew.-%, bevorzugt 0.5 - 6 %, eines oder mehrerer Kohlehydrate; und/oder
- 0,01 - 0,5 Gew.-% eines oder mehrerer Schutzmittel gegen Pilze, Hefe, Bakterien und dergleichen; und/oder
- 0,001 - 0,01 Gew.-% einer oder mehrerer bittermachender Substanzen; und/oder
- 0,01 - 0,5 Gew.-% eines oder mehrere Pigmente und/oder Farbmittel, um die Aufmerksamkeit auf den Köder zu lenken.

11. Formulierung nach einem der vorhergehenden Ansprüche 1 - 7, 9 - 10 in Form von Paste, wobei, wenn Pflanzenöle verwendet werden, Antioxidationsmittel-Zusatzmittel ebenfalls in Mengen vorliegen, die zwischen 0,01 - 0,5 Gew.-% liegen, und Milchpulver ebenfalls in Mengen vorliegt, die zwischen 0,5 und 2 Gew.-% liegen.

12. Verfahren zur Herstellung einer Rodentizidformulierung in Form von Paste, Block oder Pellets wie in einem der vorhergehenden Ansprüche 1 - 11 definiert, umfassend die Schritte des
- Mischens, unter Rühren, der Mehle mit den pulverförmigen Komponenten der Formulierung,
- Hinzusetzens des in dem Lösungsmittel und den anderen flüssigen Komponenten der Formulierung gelösten Wirkstoffs, dann des Pflanzenöls und/oder des erweichten Paraffinwachses,
- Mischens, bis eine homogene Mischung erhalten wird, die die Konsistenz einer Paste oder eine erhöhte Konsistenz im Falle von Block oder Pellets aufweist.

13. Formulierung nach einem der vorhergehenden Ansprüche 1 bis 11, wobei der Rodentizidwirkstoff in dem einen oder den mehreren für Nagetiere schmackhaften Lösungsmitteln in einer Menge von 0,25 Gew.-% gelöst wird.

14. Formulierung nach einem der vorhergehenden Ansprüche 1 bis 11, wobei, wenn die Pflanzenmehle essbare Mehle von Cerealien sind, sie aus der Gruppe ausgewählt sind bestehend aus Getreide, Mais, Reis, Gerste, Hafer, Weizen, Tapiokamehlen, Kastanienmehlen, Kokosnussmehlen oder Mischungen davon.

15. Formulierung nach einem der vorhergehenden Ansprüche 1 bis 11, wobei, wenn die Pflanzenmehle essbare Mehle von Cerealien sind, sie mit Holzmehlen, Holzspänen, Cellulose und dergleichen und/oder mit Maisstärke, anderen Stärken in Mengen von weniger als 5 Gew.-% gemischt werden.

## Revendications

1. Formulation appropriée pour la formation d'un appât rodenticide sous forme de pâte, de bloc ou de pastille, comprenant
- un ou plusieurs solvants de goût agréable pour rongeurs dans lesquels un principe actif rodenticide, qui est sélectionné parmi la bromadiolone, le brodifacoum, le difénacoum, la warfarine, est dissous,
- une ou plusieurs farines végétales,
- un ou plusieurs agents liants sélectionnés dans le groupe constitué par les graisses/huiles végétales brutes et/ou raffinées possédant une température de fusion supérieure à 36 à 39 °C, et les cires de paraffine,
**caractérisée en ce qu'**elle comprend en outre de l'hydroxyde de calcium en tant qu'agent de stabilisation de la formulation.

2. Formulation selon la revendication 1, dans laquelle le principe actif est présent en des quantités comprises entre 0,001 et 0,04 % en poids.

3. Formulation selon la revendication 1 ou 2, dans laquelle la quantité en poids d'hydroxyde de calcium est environ 50 à 90 fois supérieure à celle du principe actif.

4. Formulation selon l'une quelconque des revendications précédentes, dans laquelle les solvants au goût agréable pour les rongeurs sont le polyéthylène glycol, le polypropylène glycol, ou des mélanges de ceux-ci, et sont présents en une quantité totale comprise entre 2 et 5 % en poids.

5. Formulation selon l'une quelconque des revendications précédentes, dans laquelle les farines végétales sont sélectionnées dans le groupe constitué par les farines comestibles de céréales, l'amidon de pomme de terre, les dextrines et analogues, et sont contenues en des quantités comprises entre 20 et 90 %.

6. Formulation selon l'une quelconque des revendications précédentes, dans laquelle l'huile/graisse végétale est présente en des quantités comprises entre 20 et 30 % en poids, lorsqu'elle est sous la forme d'une pâte.

7. Formulation selon la revendication 6, dans laquelle l'huile est une huile de palme brute présentant une acidité (sous forme d'acide palmitique) inférieure ou égale à 5 %, ou des huiles partiellement hydrogénées possédant une température de fusion d'environ 50 °C, ou des mélanges de celles-ci.

8. Formulation selon l'une quelconque des revendications 1 à 5, dans laquelle la cire de paraffine est présente en des quantités comprises entre 20 et 40 % en poids, lorsqu'elle est sous la forme de bloc.

9. Formulation selon l'une quelconque des revendications 1 à 5, dans laquelle l'huile/graisse végétale et/ou la cire de paraffine sont présentes en des quantités totales de 5 % en poids ou également inférieures, lorsqu'elle est sous la forme de pastilles.

10. Formulation selon l'une quelconque des revendications précédentes, comprenant en outre
- de 0,1 à 1 % en poids d'un ou plusieurs agents émulsifiants ; et/ou
- de 0,1 à 8 % en poids, de préférence de 0,5 à 6 %, d'un ou plusieurs glucides ; et/ou
- de 0,01 à 0,5 % en poids d'un ou plusieurs conservateurs contre les champignons, les levures, les bactéries et analogues ; et/ou
- de 0,001 à 0,01 % en poids d'une ou plusieurs substances apportant de l'amertume ; et/ou
- de 0,01 à 0,5 % en poids d'un ou plusieurs pigments et/ou agents colorants pour mettre en évidence l'appât.

11. Formulation selon l'une quelconque des revendications 1 à 7, 9 à 10 sous la forme d'une pâte, dans laquelle, lorsque des huiles végétales sont utilisées, des additifs antioxydants sont également présents en des quantités comprises entre 0,01 et 0,5 % en poids, et en outre du lait en poudre est présent en des quantités comprises entre 0,5 et 2 % en poids.

12. Procédé de préparation d'une formulation rodenticide sous la forme d'une pâte, d'un bloc ou de pastilles telle que définie selon l'une quelconque des revendications précédentes 1 à 11, comprenant les étapes consistant à
- mélanger, tout en agitant, les farines avec les composants en poudre de la formulation,
- ajouter le principe actif dissous dans le solvant et les autres composants liquides de la formulation, puis l'huile végétale et/ou la cire de paraffine ramollie,
- mélanger jusqu'à l'obtention d'un mélange homogène ayant la consistance d'une pâte ou une consistance améliorée dans le cas d'un bloc ou de pastilles.

13. Formulation selon l'une quelconque des revendications 1 à 11, dans laquelle ledit principe actif rodenticide est dissous dans ledit ou lesdits solvants de goût agréable pour des rongeurs à 0,25 % en poids.

14. Formulation selon l'une quelconque des revendications 1 à 11, dans laquelle lorsque les farines végétales sont des farines comestibles de céréales, elles sont sélectionnées dans le groupe constitué par les graines, le maïs, le riz, l'orge, l'avoine, le blé, les farines de tapioca, la farine de châtaigne, la farine de noix de coco ou des mélanges de ceux-ci.

15. Formulation selon l'une quelconque des revendications 1 à 11, dans laquelle les farines végétales sont des farines comestibles de céréales, qui sont mélangées avec des farines de bois, des copeaux de bois, de la cellulose et analogues, et/ou avec de l'amidon de maïs, d'autres amidons, en des quantités inférieures à 5 % en poids.
